# EUROPEAN PATENT APPLICATION

(11) **EP 4 593 369 A1**
(43) Date of publication of application: **30.07.2025**
(21) Application number: 23868099.5
(22) Date of filing: 12.09.2023
(51) Int. Cl.: H04N 7/18, G06T 1/00, G06T 7/00

(54) **INFORMATION PROCESSING DEVICE AND INFORMATION PROCESSING METHOD**

(30) Priority: 22.09.2022 JP 2022151576
(71) Applicant: Sony Semiconductor Solutions Corporation, Atsugi-shi, Kanagawa 243-0014 (JP)
(72) Inventor: YAMANAKA, Kazuhiro, Atsugi-shi, Kanagawa 243-0014 (JP)
(74) Representative: Müller Hoffmann & Partner
(86) International application number: PCT/JP2023/033196
(87) International publication number: WO 2024/062976

(57) **Abstract**

An information processing device includes: a viewpoint transformation unit that performs viewpoint transformation on a plurality of images generated by a plurality of imaging units mounted on front, rear, left, and right sides of a vehicle; and an overhead image generating unit that generates an overhead image by combining the plurality of images having been subjected to the viewpoint transformation by the viewpoint transformation unit, in which the overhead image generating unit: in a case where a first overhead image to be displayed in the vehicle is generated, executes first synthesis processing; and, in a case where a second overhead image for executing recognition processing for surroundings of the vehicle is generated, executes second synthesis processing different from the first synthesis processing.

## Description

### Field

The present disclosure relates to an information processing device and an information processing method.

### Background

In operation vehicles such as combine harvesters, displaying an overhead image is performed, the overhead image obtained by transforming the viewpoint of images capturing surroundings of an operation vehicle and synthesizing the images. Furthermore, when generating an overhead image, it is proposed to display an overhead image suitable for the attitude, the size, and the like of a work device mounted on the operation vehicle by modifying a synthesis pattern depending on the size of the work device (Patent Literature 1).

### Citation List

### Patent Literature

Patent Literature 1: JP 2018-101860 A

### Summary

### Technical Problem

However, in the above-described related art, the user monitors the surroundings of the work device by the overhead image being displayed, and it is not examined to use the overhead image for a plurality of applications such as displaying and sensing. Furthermore, in a case where the overhead image is used for a plurality of applications, image geometric transformation processing such as viewpoint transformation and distortion correction is performed depending on the application, and thus, there is a case where a processing load increases.

Therefore, the present disclosure proposes an information processing device and an information processing method capable of reducing the load of the image geometric transformation processing.

### Solution to Problem

According to the present disclosure, an information processing device includes: a viewpoint transformation unit that performs viewpoint transformation on a plurality of images generated by a plurality of imaging units mounted on front, rear, left, and right sides of a vehicle; and an overhead image generating unit that generates an overhead image by combining the plurality of images having been subjected to the viewpoint transformation by the viewpoint transformation unit, wherein the overhead image generating unit in a case where a first overhead image to be displayed in the vehicle is generated, executes first synthesis processing, and in a case where a second overhead image for executing recognition processing for surroundings of the vehicle is generated, executes second synthesis processing different from the first synthesis processing.

### Brief Description of Drawings

FIG. 1 is a block diagram illustrating a configuration example of a vehicle control system.
FIG. 2 is a diagram illustrating an example of sensing areas.
FIG. 3 is a block diagram illustrating an example of a functional configuration of a recognition unit.
FIG. 4 is a diagram illustrating an example of synthesis of a first overhead image.
FIG. 5 is a diagram illustrating an example of synthesis of a second overhead image.
FIG. 6 is a flowchart illustrating an example of overhead image generation processing.
FIG. 7 is a hardware configuration diagram illustrating an example of a computer that implements functions of an information processing device.

### Description of Embodiments

Hereinafter, embodiments of the present disclosure will be described in detail on the basis of the drawings. Note that in each of the following embodiments, the same parts are denoted by the same symbols, and redundant description will be omitted.

Hereinafter, modes for carrying out the present technology will be described. Description will be given in the following order.
1. Configuration Example of Vehicle Control System
2. Functional Configuration of Recognition Unit
3. Procedure of Information Processing According to Embodiments
4. Modifications of Embodiments
5. Hardware Configuration
6. Effects

### <<1. Configuration Example of Vehicle Control System>>

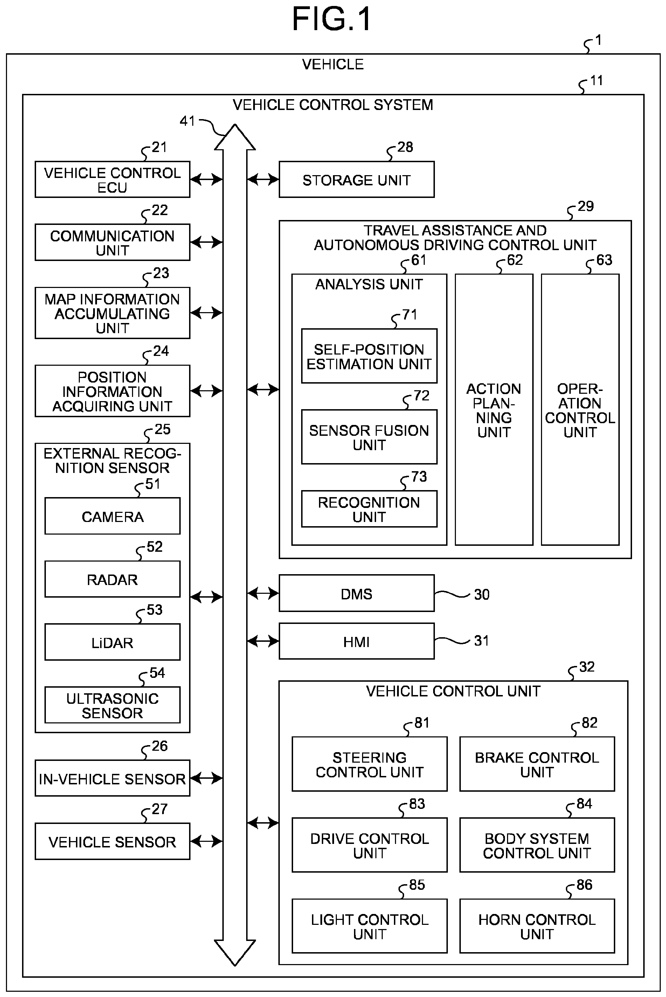

FIG. 1 is a block diagram illustrating a configuration example of a vehicle control system 11 as an example of a traveling device control system to which the present technology is applied.

The vehicle control system 11 is included in a vehicle 1 and performs processing related to travel assistance and autonomous driving of the vehicle 1. Note that the vehicle 1 is not limited to the above-described operation vehicles but also includes general vehicles such as a passenger car.

The vehicle control system 11 includes a vehicle control electronic control unit (ECU) 21, a communication unit 22, a map information accumulating unit 23, a position information acquiring unit 24, an external recognition sensor 25, an in-vehicle sensor 26, a vehicle sensor 27, a storage unit 28, a travel assistance and autonomous driving control unit 29, a driver monitoring system (DMS) 30, a human machine interface (HMI) 31, and a vehicle control unit 32.

The vehicle control ECU 21, the communication unit 22, the map information accumulating unit 23, the position information acquiring unit 24, the external recognition sensor 25, the in-vehicle sensor 26, the vehicle sensor 27, the storage unit 28, the travel assistance and autonomous driving control unit 29, the driver monitoring system (DMS) 30, the human-machine interface (HMI) 31, and the vehicle control unit 32 are communicably connected to each other via a communication network 41. The communication network 41 includes, for example, an in-vehicle communication network conforming to digital bilateral communication standards, such as a controller area network (CAN), a local interconnect network (LIN), a local area network (LAN), FlexRay (registered trademark), or Ethernet (registered trademark), a bus, or the like. The communication network 41 may be selectively used depending on the type of data to be transmitted. For example, a CAN may be applied to data related to vehicle control, and Ethernet may be applied to large-capacity data. Note that each unit of the vehicle control system 11 may be directly connected, not via the communication network 41, but by using wireless communication based on the premise of communication at a relatively short distance, such as near field communication (NFC) or Bluetooth (registered trademark).

Note that, hereinafter, in a case where each unit of the vehicle control system 11 performs communication via the communication network 41, description of the communication network 41 will be omitted. For example, in a case where the vehicle control ECU 21 and the communication unit 22 perform communication via the communication network 41, it is simply described that the vehicle control ECU 21 and the communication unit 22 perform communication.

The vehicle control ECU 21 includes, for example, various processors such as a central processing unit (CPU) or a micro processing unit (MPU). The vehicle control ECU 21 controls all or some of functions of the vehicle control system 11.

The communication unit 22 communicates with various devices inside and outside the vehicle, other vehicles, servers, base stations, and the like and transmits and receives various types of data. At this point, the communication unit 22 can perform communication using a plurality of communication schemes.

Communication that the communication unit 22 can execute with the outside of the vehicle will be schematically described. The communication unit 22 communicates with a server (hereinafter, referred to as an external server) or the like on an external network via a base station or an access point by a wireless communication scheme such as the 5th generation mobile communication system (5G), long term evolution (LTE), or dedicated short range communications (DSRC). The external network with which the communication unit 22 communicates is, for example, the Internet, a cloud network, a network unique to a company, or the like. The communication scheme performed by the communication unit 22 with the external network is not particularly limited as long as it is a wireless communication scheme capable of performing digital bidirectional communication at a communication speed equal to or higher than a predetermined speed and at a distance equal to or longer than a predetermined distance.

Furthermore, for example, the communication unit 22 can communicate with a terminal present in the vicinity of a host vehicle using the peer to peer (P2P) technology. The terminal present in the vicinity of the host vehicle is, for example, a terminal worn by a traveling body traveling at a relatively low speed such as a pedestrian or a bicycle, a terminal installed in a store or the like with a position fixed, or a machine type communication (MTC) terminal. Furthermore, the communication unit 22 can also perform V2X communication. The V2X communication refers to communication between the host vehicle and another party, such as vehicle to vehicle communication with another vehicle, vehicle to infrastructure communication with a roadside device or the like, vehicle to home communication with a house, and vehicle to pedestrian communication with a terminal or the like carried by a pedestrian.

The communication unit 22 can receive, for example, a program for updating software for controlling the operation of the vehicle control system 11 from the outside (Over-the-Air). The communication unit 22 can further receive map information, traffic information, information of the surroundings of the vehicle 1, and others from the outside. Furthermore, for example, the communication unit 22 can transmit information regarding the vehicle 1, information of the surroundings of the vehicle 1, and others to the outside. Examples of the information of the vehicle 1 transmitted to the outside by the communication unit 22 include data indicating the state of the vehicle 1, a recognition result by a recognition unit 73, and others. Furthermore, for example, the communication unit 22 performs communication conforming to a vehicle emergency call system such as the eCall.

For example, the communication unit 22 receives an electromagnetic wave transmitted by the vehicle information and communication system (VICS) (registered trademark) such as a radio wave beacon, an optical beacon, or FM multiplex broadcasting.

Communication that the communication unit 22 can execute with the inside of the vehicle will be schematically described. The communication unit 22 can communicate with each device in the vehicle using, for example, wireless communication. The communication unit 22 can perform wireless communication with an in-vehicle device by a communication scheme capable of performing digital bidirectional communication at a communication speed equal to or higher than a predetermined speed by wireless communication, such as wireless LAN, Bluetooth, NFC, or wireless USB (WUSB). Without being limited to the above, and the communication unit 22 can also communicate with each device in the vehicle using wired communication. For example, the communication unit 22 can communicate with each device in the vehicle by wired communication via a cable connected to a connection terminal (not illustrated). The communication unit 22 can communicate with each device in the vehicle by a communication scheme capable of performing digital bidirectional communication at a predetermined communication speed or higher by wired communication, such as the universal serial bus (USB), high-definition multimedia interface (HDMI) (registered trademark), or mobile high-definition link (MHL).

Here, a device in the vehicle refers to, for example, a device that is not connected to the communication network 41 in the vehicle. As examples of the device in the vehicle, a mobile device or a wearable device carried by a passenger such as a driver, an information device brought into the vehicle and temporarily installed, or the like are conceivable.

The map information accumulating unit 23 accumulates one or both of a map acquired from the outside and a map created in the vehicle 1. For example, the map information accumulating unit 23 accumulates three-dimensional high-precision maps, a global map having lower accuracy than the high-precision maps but covering a wide area, and others.

The high-precision maps are, for example, dynamic maps, point cloud maps, vector maps, or others. The dynamic map is, for example, a map including four layers of dynamic information, semi-dynamic information, semi-static information, and static information and is provided to the vehicle 1 from an external server or the like. The point cloud map is a map including point clouds (point cloud data). The vector map is, for example, a map in which traffic information such as lanes and positions of traffic lights are associated with a point cloud map and adapted to an advanced driver assistance system (ADAS) or autonomous driving (AD).

The point cloud map and the vector map may be provided from, for example, an external server or the like or may be created in the vehicle 1 as a map for performing matching with a local map to be described later on the basis of a sensing result by a camera 51, a radar 52, LiDAR 53, or the like and accumulated in the map information accumulating unit 23. In addition, in a case where a high-precision map is provided from an external server or the like, for example, map data of several hundred meters square regarding a planned path on which the vehicle 1 travels from now is acquired from an external server or the like in order to reduce the communication capacity.

The position information acquiring unit 24 receives global navigation satellite system (GNSS) signals from GNSS satellites and acquires position information of the vehicle 1. The acquired position information is supplied to the travel assistance and autonomous driving control unit 29. Note that the position information acquiring unit 24 is not limited to the method using the GNSS signals and may acquire the position information using, for example, a beacon.

The external recognition sensor 25 includes various sensors used for recognition of a situation outside the vehicle 1 and supplies sensor data from each of the sensors to units in the vehicle control system 11. Any type and any number of sensors may be included in the external recognition sensor 25.

For example, the external recognition sensor 25 includes the camera 51, the radar 52, the light detection and ranging or laser imaging detection and ranging (LiDAR) 53, and an ultrasonic sensor 54. Without being limited to the above, the external recognition sensor 25 may include one or more types of sensors among the camera 51, the radar 52, the LiDAR 53, and the ultrasonic sensor 54. The numbers of the cameras 51, the radars 52, the LiDARs 53, and the ultrasonic sensors 54 are not particularly limited as long as they can be practically installed in the vehicle 1. Furthermore, the type of sensor included in the external recognition sensor 25 is not limited to this example, and the external recognition sensor 25 may include another type of sensor. Examples of the sensing area of each sensor included in the external recognition sensor 25 will be described later.

Note that the imaging method of the camera 51 is not particularly limited. For example, cameras of various imaging methods such as a time-of-flight (ToF) camera using an imaging method capable of ranging, stereo cameras, a monocular camera, and an infrared camera can be applied to the camera 51 as necessary. Without being limited to the above, the camera 51 may simply acquire a captured image regardless of ranging.

Furthermore, for example, the external recognition sensor 25 can include an environment sensor for detecting the environment for the vehicle 1. The environment sensor is a sensor for detecting an environment such as the weather, the climate, or the brightness and can include various sensors such as a raindrop sensor, a fog sensor, a sunshine sensor, a snow sensor, and an illuminance sensor.

Furthermore, for example, the external recognition sensor 25 includes a microphone used for detection of sound around the vehicle 1, the position of a sound source, and others.

The in-vehicle sensor 26 includes various sensors for detecting information inside the vehicle and supplies sensor data from each sensor to each unit of the vehicle control system 11. The type and the number of various sensors included in the in-vehicle sensor 26 are not particularly limited as long as they can be practically installed in the vehicle 1.

For example, the in-vehicle sensor 26 can include one or more types of sensors of a camera, a radar, a seating sensor, a steering wheel sensor, a microphone, and a biological sensor. As the camera included in the in-vehicle sensor 26, for example, cameras of various imaging methods capable of ranging, such as a ToF camera, a stereo camera, a monocular camera, and an infrared camera, can be used. Without being limited to the above, the camera included in the in-vehicle sensor 26 may simply acquire a captured image regardless of ranging. The biological sensor included in the in-vehicle sensor 26 is included, for example, on a seat, a steering wheel, or the like and detects various types of biological information of a passenger such as the driver.

The vehicle sensor 27 includes various sensors for detecting the state of the vehicle 1 and supplies sensor data from each sensor to each unit of the vehicle control system 11. The type and the number of various sensors included in the vehicle sensor 27 are not particularly limited as long as they can be practically installed in the vehicle 1.

For example, the vehicle sensor 27 includes a speed sensor, an acceleration sensor, an angular velocity sensor (gyro sensor), and an inertial measurement unit (IMU) integrating these sensors. For example, the vehicle sensor 27 includes a steering angle sensor that detects the steering angle of the steering wheel, a yaw rate sensor, an accelerator sensor that detects an operation amount of an accelerator pedal, and a brake sensor that detects an operation amount of a brake pedal. For example, the vehicle sensor 27 includes a rotation sensor that detects the number of revolutions of the engine or the motor, an air pressure sensor that detects the air pressure of the tires, a slip ratio sensor that detects the slip ratio of the tires, and a wheel speed sensor that detects the rotational speed of the wheels. For example, the vehicle sensor 27 includes a battery sensor that detects a remaining amount and the temperature of a battery and an impact sensor that detects an impact from the outside.

The storage unit 28 includes at least one of a nonvolatile storage medium or a volatile storage medium and stores data or a program. The storage unit 28 is used as, for example, an electrically erasable programmable read-only memory (EEPROM) and a random access memory (RAM), and a magnetic storage device such as a hard disc drive (HDD), a semiconductor storage device, an optical storage device, and a magneto-optical storage device can be applied as the storage medium. The storage unit 28 stores various programs and data used by each unit of the vehicle control system 11. For example, the storage unit 28 includes an event data recorder (EDR) and a data storage system for automated driving (DSSAD) and stores information of the vehicle 1 before and after an event such as an accident and information acquired by the in-vehicle sensor 26.

The travel assistance and autonomous driving control unit 29 controls travel assistance and autonomous driving of the vehicle 1. For example, the travel assistance and autonomous driving control unit 29 includes an analysis unit 61, an action planning unit 62, and an operation control unit 63.

The analysis unit 61 performs analysis processing of the situation of the vehicle 1 and the surroundings. The analysis unit 61 includes a self-position estimation unit 71, a sensor fusion unit 72, and the recognition unit 73.

The self-position estimation unit 71 estimates the self-position of the vehicle 1 on the basis of the sensor data from the external recognition sensor 25 and the high-precision maps accumulated in the map information accumulating unit 23. For example, the self-position estimation unit 71 generates a local map on the basis of the sensor data from the external recognition sensor 25 and estimates the self-position and the attitude of the vehicle 1 by matching the local map with the high-precision maps. The position of the vehicle 1 is based on, for example, the center of the axle of the pair of rear wheels.

The local map is, for example, a three-dimensional high-precision map created using technology such as simultaneous localization and mapping (SLAM), an occupancy grid map, or the like. The three-dimensional high-precision map is, for example, the above-described point cloud map or the like. The occupancy grid map is a map in which a three-dimensional or two-dimensional space around the vehicle 1 is divided into grids of a predetermined size, and an occupancy state of an object is indicated for every grid. The occupancy state of the object is indicated by, for example, the presence or absence or the presence probability of the object. The local map is also used for detection processing and recognition processing of a situation outside the vehicle 1 by the recognition unit 73, for example.

Note that the self-position estimation unit 71 may estimate the self-position of the vehicle 1 on the basis of the position information acquired by the position information acquiring unit 24 and the sensor data from the vehicle sensor 27.

The sensor fusion unit 72 performs sensor fusion processing of combining a plurality of different types of sensor data (for example, image data supplied from the camera 51 and sensor data supplied from the radar 52) to obtain new information. Methods for combining different types of sensor data include integration, fusion, association, and the like.

The recognition unit 73 executes detection processing for detecting a situation outside the vehicle 1 and recognition processing for recognizing a situation outside the vehicle 1.

For example, the recognition unit 73 performs detection processing and recognition processing of a situation outside the vehicle 1 on the basis of information from the external recognition sensor 25, information from the self-position estimation unit 71, information from the sensor fusion unit 72, and others.

Specifically, for example, the recognition unit 73 performs detection processing, recognition processing, and the like of an object around the vehicle 1. The detection processing of an object is, for example, processing of detecting the presence or absence, the size, the shape, the position, the motion, and the like of the object. The recognition processing of an object is, for example, processing of recognizing an attribute such as the type of the object or identifying a specific object. However, the detection processing and the recognition processing are not necessarily clearly divided and may overlap with each other.

For example, the recognition unit 73 detects an object around the vehicle 1 by performing clustering of classifying point clouds based on sensor data by the radar 52, the LiDAR 53, or the like into groups of point clouds. As a result, the presence or absence, the size, the shape, and the position of an object around the vehicle 1 are detected.

For example, the recognition unit 73 detects the motion of an object around the vehicle 1 by performing tracking of following the motion of a group of a point cloud classified by the clustering. As a result, the speed and the traveling direction (travel vector) of the object around the vehicle 1 are detected.

For example, the recognition unit 73 detects or recognizes a vehicle, a person, a bicycle, an obstacle, a structure, a road, a traffic light, a traffic sign, road marking, and the like on the basis of image data supplied from the camera 51. Furthermore, the recognition unit 73 may recognize the type of the object around the vehicle 1 by performing recognition processing such as semantic segmentation.

For example, the recognition unit 73 can perform recognition processing of traffic rules around the vehicle 1 on the basis of the maps accumulated in the map information accumulating unit 23, an estimation result of the self-position by the self-position estimation unit 71, and a recognition result of an object around the vehicle 1 by the recognition unit 73. Through this processing, the recognition unit 73 can recognize the position and the state of the traffic light, the content of the traffic sign and the road marking, the content of the traffic regulations, travelable lanes, and the like.

For example, the recognition unit 73 can perform the recognition processing of the environment around the vehicle 1. As the surrounding environment to be recognized by the recognition unit 73, the weather, the temperature, the humidity, the brightness, the state of a road surface, and the like are conceivable.

The action planning unit 62 creates an action plan of the vehicle 1. For example, the action planning unit 62 creates an action plan by performing processing of global path planning and path tracking.

Note that the global path planning is processing of planning a rough path from the start to the goal. This global path planning also includes processing, referred to as path planning, of performing local path planning that enables safe and smooth traveling in the vicinity of the vehicle 1 in consideration of the motion characteristics of the vehicle 1 on the planned path.

The path tracking is processing of planning an operation for safely and accurately traveling on the path planned by the global path planning within a planned time. For example, the action planning unit 62 can calculate a target speed and a target angular velocity of the vehicle 1 on the basis of the result of the path tracking processing.

The operation control unit 63 controls the operation of the vehicle 1 in order to implement the action plan created by the action planning unit 62.

For example, the operation control unit 63 controls a steering control unit 81, a brake control unit 82, and a drive control unit 83 included in the vehicle control unit 32, to be described later, to perform acceleration and deceleration control and direction control in such a manner that the vehicle 1 travels on the path calculated by the path planning. For example, the operation control unit 63 performs cooperative control for the purpose of implementing the functions of the ADAS such as collision avoidance or impact mitigation, follow-up traveling, vehicle speed maintaining traveling, collision warning for the host vehicle, lane deviation warning for the host vehicle, and the like. The operation control unit 63 performs, for example, cooperative control intended for autonomous driving or the like in which the vehicle travels autonomously without depending on the operation of the driver.

The DMS 30 performs authentication processing of the driver, recognition processing of the state of the driver, and the like on the basis of sensor data from the in-vehicle sensor 26, input data input to the HMI 31 to be described later, and others. As the state of the driver to be recognized, for example, the physical condition, the arousal level, the concentration level, the fatigue level, the line-of-sight direction, the drunkenness level, a driving operation, the posture, and the like are conceivable.

Note that the DMS 30 may perform authentication processing of a passenger other than the driver and recognition processing of the state of the passenger. Furthermore, for example, the DMS 30 may perform recognition processing of the situation inside the vehicle on the basis of sensor data from the in-vehicle sensor 26. As the situation inside the vehicle to be recognized, for example, the temperature, the humidity, the brightness, the odor or the sent, and the like are conceivable.

The HMI 31 inputs various types of data, instructions, and the like and presents the various types of data to the driver and others.

Data input by the HMI 31 will be schematically described. The HMI 31 includes an input device for a person to input data. The HMI 31 generates an input signal on the basis of data, an instruction, or the like input by the input device and supplies the input signal to each unit of the vehicle control system 11. The HMI 31 includes an operator such as a touch panel, a button, a switch, or a lever as the input device. Without being limited to the above, the HMI 31 may further include an input device capable of inputting information by a method other than manual operation such as by voice, a gesture, or others. Furthermore, the HMI 31 may use, for example, a remote control device using infrared rays or radio waves or an external connection device such as a mobile device or a wearable device supporting the operation of the vehicle control system 11 as an input device.

Presentation of data by the HMI 31 will be schematically described. The HMI 31 generates visual information, auditory information, and tactile information for the passengers or the outside of the vehicle. In addition, the HMI 31 performs output control for controlling output, output content, output timing, an output method, and others of each piece of information that is generated. The HMI 31 generates and outputs, as the visual information, information indicated by images or light such as an operation screen, state display of the vehicle 1, warning display, or a monitor image indicating a situation around the vehicle 1. Furthermore, the HMI 31 generates and outputs information indicated by sounds such as a voice guidance, a warning sound, or a warning message as the auditory information. Furthermore, the HMI 31 generates and outputs, as the tactile information, information given to the tactile sense of the passengers by, for example, a force, vibrations, a motion, or the like.

As an output device with which the HMI 31 outputs the visual information, for example, a display device that presents the visual information by displaying an image thereon or a projector device that presents the visual information by projecting an image are applicable. Note that the display device may be a device that displays the visual information in the field of view of the passengers such as a head-up display, a transmissive display, or a wearable device having an augmented reality (AR) function other than a display device having a normal display. In addition, the HMI 31 can use display devices included in a navigation device, an instrument panel, a camera monitoring system (CMS), an electronic mirror, a lamp, or the like included in the vehicle 1 as an output device that outputs the visual information.

As an output device from which the HMI 31 outputs the auditory information, for example, an audio speaker, headphones, or earphones are applicable.

As an output device to which the HMI 31 outputs the tactile information, for example, a haptics element using haptic technology is applicable. The haptics element is provided, for example, at a portion with which a passenger of the vehicle 1 comes into contact, such as a steering wheel or a seat.

The vehicle control unit 32 controls each unit of the vehicle 1. The vehicle control unit 32 includes the steering control unit 81, the brake control unit 82, the drive control unit 83, a body system control unit 84, a light control unit 85, and a horn control unit 86.

The steering control unit 81 detects and controls the state of the steering system of the vehicle 1. The steering system includes, for example, a steering mechanism including a steering wheel and the like, an electric power steering, and the like. The steering control unit 81 includes, for example, a steering ECU that controls the steering system, an actuator that drives the steering system, and others.

The brake control unit 82 detects and controls the state of the brake system of the vehicle 1. The brake system includes, for example, a brake mechanism including a brake pedal, an antilock brake system (ABS), a regenerative brake mechanism, and the like. The brake control unit 82 includes, for example, a brake ECU that controls the brake system, an actuator that drives the brake system, and the like.

The drive control unit 83 detects and controls the state of a drive system of the vehicle 1. The drive system includes, for example, a driving force generation device for generating a driving force such as an accelerator pedal, an internal combustion engine, and a driving motor, a driving force transmission mechanism for transmitting the driving force to wheels, and others. The drive control unit 83 includes, for example, a drive ECU that controls the drive system, actuators that drive the drive system, and others.

The body system control unit 84 detects and controls the state of a body system of the vehicle 1. The body system includes, for example, a keyless entry system, a smart key system, a power window device, a power seat, an air conditioner, an airbag, a seat belt, a shift lever, and others. The body system control unit 84 includes, for example, a body system ECU that controls the body system, actuators that drive the body system, and others.

The light control unit 85 detects and controls states of various lights of the vehicle 1. As the lights to be controlled, for example, a headlight, a backlight, a fog light, a turn signal, a brake light, projection, display on a bumper, and the like are conceivable. The light control unit 85 includes a light ECU that controls the lights, actuators that drive the lights, and the like.

The horn control unit 86 detects and controls the state of a car horn of the vehicle 1. The horn control unit 86 includes, for example, a horn ECU that controls the car horn, an actuator that drives the car horn, and the like.

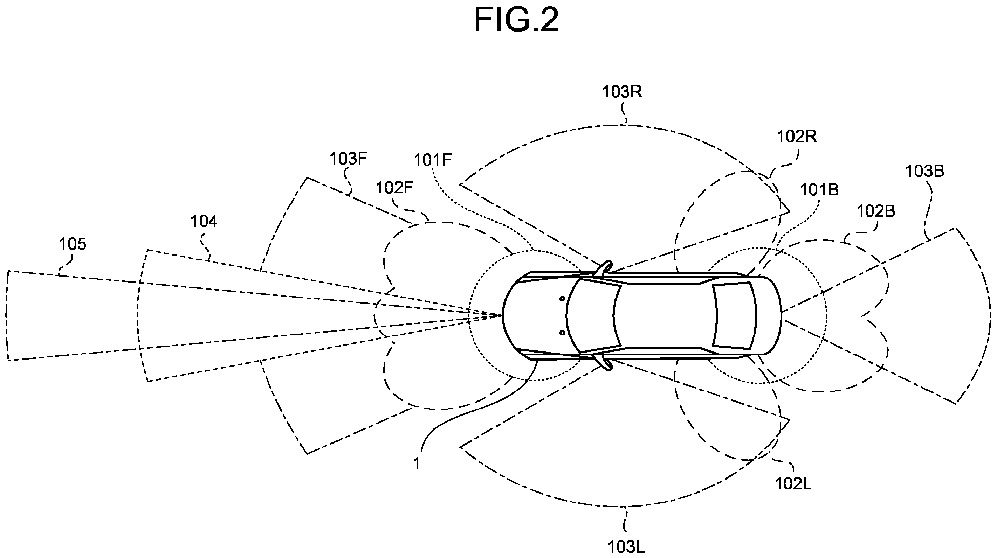

FIG. 2 is a diagram illustrating an example of sensing areas by the camera 51, the radar 52, the LiDAR 53, the ultrasonic sensor 54, or others of the external recognition sensor 25 in FIG. 1. Note that FIG. 2 schematically illustrates the vehicle 1 as viewed from above, in which the left end side is the front end (front) side of the vehicle 1, and the right end side is the rear end (rear) side of the vehicle 1.

A sensing area 101F and a sensing area 101B indicate examples of sensing areas of ultrasonic sensors 54. The sensing area 101F covers the periphery of the front end of the vehicle 1 by a plurality of ultrasonic sensors 54. The sensing area 101B covers the periphery of the rear end of the vehicle 1 by a plurality of ultrasonic sensors 54.

Sensing results in the sensing area 101F and the sensing area 101B are used for, for example, parking assistance of the vehicle 1.

A sensing area 102F or a sensing area 102B indicates an example of a sensing area of the radar 52 for a short distance or a middle distance. The sensing area 102F covers up to a position farther than the sensing area 101F ahead of the vehicle 1. The sensing area 102B covers up to a position farther than the sensing area 101B behind the vehicle 1. A sensing area 102L covers the rear periphery of the left side face of the vehicle 1. A sensing area 102R covers the rear periphery of the right side face of the vehicle 1.

A sensing result in the sensing area 102F is used, for example, to detect a vehicle, a pedestrian, or the like present ahead of the vehicle 1. A sensing result in the sensing area 102B is used for, for example, a collision prevention function or the like behind the vehicle 1. Sensing results in the sensing area 102L and the sensing area 102R are used for, for example, detecting an object in a blind spot on the sides of the vehicle 1.

A sensing area 103F or a sensing area 103B indicates an example of a sensing area by the camera 51. The sensing area 103F covers up to a position farther than the sensing area 102F ahead of the vehicle 1. The sensing area 103B covers up to a position farther than the sensing area 102B behind the vehicle 1. A sensing area 103L covers the periphery of the left side face of the vehicle 1. A sensing area 103R covers the periphery of the right side face of the vehicle 1.

A sensing result in the sensing area 103F can be used for, for example, recognition of a traffic light or a traffic sign, a lane deviation prevention assist system, and an automatic headlight control system. A sensing result in the sensing area 103B can be used for, for example, parking assistance and a surround view system. Sensing results in the sensing area 103L and the sensing area 103R can be used for the surround view system, for example.

A sensing area 104 indicates an example of a sensing area of the LiDAR 53. The sensing area 104 covers up to a position farther than the sensing area 103F ahead of the vehicle 1. Meanwhile, the sensing area 104 has a narrower area in the left-right direction than that of the sensing area 103F.

A sensing result in the sensing area 104 is used for, for example, detecting an object such as a surrounding vehicle.

A sensing area 105 indicates an example of a sensing area of the radar 52 for a long distance. The sensing area 105 covers up to a position farther than the sensing area 104 ahead of the vehicle 1. Meanwhile, the sensing area 105 has a narrower area in the left-right direction than that of the sensing area 104.

A sensing result in the sensing area 105 is used for, for example, adaptive cruise control (ACC), emergency braking, collision avoidance, and the like.

Note that the sensing areas of the sensors of the camera 51, the radar 52, the LiDAR 53, and the ultrasonic sensor 54 included in the external recognition sensor 25 may have various configurations other than those in FIG. 2. Specifically, the ultrasonic sensor 54 may also perform sensing on the sides of the vehicle 1, or the LiDAR 53 may perform sensing behind the vehicle 1. In addition, the installation positions of the sensors are not limited to the examples described above. Furthermore, the number of the sensors may be one or plural.

### <<2. Functional Configuration of Recognition Unit>>

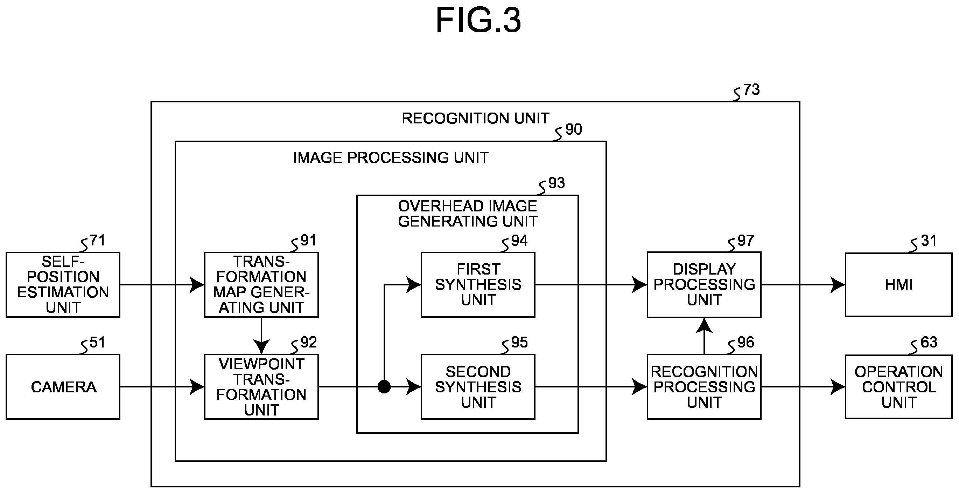

Next, a functional configuration of a recognition unit 73 will be described with reference to FIG. 3. FIG. 3 is a block diagram illustrating an example of the functional configuration of the recognition unit. As illustrated in FIG. 3, the recognition unit 73 includes an image processing unit 90, a recognition processing unit 96, and a display processing unit 97. Note that, in the recognition unit 73 illustrated in FIG. 3, portions related to generation of an overhead image will be described, and other functional configurations will be omitted. The recognition unit 73 is an example of the information processing device.

The image processing unit 90 includes a transformation map generating unit 91, a viewpoint transformation unit 92, and an overhead image generating unit 93. The overhead image generating unit 93 further includes a first synthesis unit 94 and a second synthesis unit 95.

The transformation map generating unit 91 generates a transformation map for transforming a plurality of images captured by cameras 51 in front, rear, left, and right sides of the vehicle 1 into an overhead image. The transformation map generating unit 91 generates a homography matrix (projective transformation matrix) corresponding to the cameras 51 on the basis of the attitudes of the cameras 51 acquired from the self-position estimation unit 71 and preset camera parameters and overhead image parameters. The transformation map generating unit 91 generates a transformation map corresponding to the cameras 51 on the basis of the camera parameters, the overhead image parameters, and the homography matrix having been generated. The transformation map generating unit 91 outputs the generated transformation map to the viewpoint transformation unit 92.

Captured images are input from the cameras 51 to the viewpoint transformation unit 92, and the transformation map is input from the transformation map generating unit 91. The viewpoint transformation unit 92 executes distortion correction and viewpoint transformation on the input captured images corresponding to the respective cameras 51 by using the corresponding transformation map. The viewpoint transformation unit 92 outputs, to the overhead image generating unit 93, the images corresponding to the respective cameras 51 that have been subjected to the viewpoint transformation. Note that the transformation map generating unit 91 and the viewpoint transformation unit 92 may repeat the generation of the transformation map as well as the distortion correction and the viewpoint transformation, for example, for a time period in which it is possible to track an attitude change corresponding to the traveling state of the vehicle 1.

The overhead image generating unit 93 generates, for example, a first overhead image to be displayed on a display device of an HMI 31 and a second overhead image for execution of recognition processing for the surroundings of the vehicle 1 on the basis of an instruction from a travel assistance and autonomous driving control unit 29 or an operation by the driver or the like that is input from the HMI 31. The images having been subjected to viewpoint transformation are input from the viewpoint transformation unit 92 to the overhead image generating unit 93. The overhead image generating unit 93 further includes the first synthesis unit 94 and the second synthesis unit 95.

When the images having been subjected to the viewpoint transformation are input from the viewpoint transformation unit 92, the overhead image generating unit 93 determines whether the application of the overhead image is for display or for recognition. In a case where it is determined that the application of the overhead image is for display, the overhead image generating unit 93 inputs the mages having been subjected to the viewpoint transformation to the first synthesis unit 94. Meanwhile, in a case where it is determined that the application of the overhead image is for recognition, the overhead image generating unit 93 inputs the mages having been subjected to the viewpoint transformation to the second synthesis unit 95. Note that, in a case where display and recognition are executed in parallel, the overhead image generating unit 93 inputs the images having been subjected to the viewpoint transformation to the first synthesis unit 94 and the second synthesis unit 95.

The first synthesis unit 94 executes first synthesis processing of combining the input images having been subjected to the viewpoint transformation by gradient blending and generating a first overhead image. The first synthesis unit 94 executes gradient blending using gradient blending values (hereinafter, also referred to as GB values) having predetermined gradation at a boundary and generates the first overhead image. Furthermore, the first synthesis unit 94 may execute the gradient blending after performing color correction in such a manner as to make the colors smoothly change in the images having been subjected to the viewpoint transformation or may perform color correction in such a manner as to make the colors smoothly change in the gradient blending. The first synthesis unit 94 outputs the generated first overhead image to the display processing unit 97.

The second synthesis unit 95 executes second synthesis processing of combining the input images having been subjected to the viewpoint transformation by simple blending and generating a second overhead image. The second synthesis unit 95 executes simple blending by using GB values having no gradation at the boundary to generate the second overhead image. Furthermore, when combining the images having been subjected to the viewpoint transformation, the second synthesis unit 95 may combine the viewpoint-transformed images at a synthesis position different from a synthesis position in the first synthesis unit 94. For example, in a case where it is desired to use an image of the camera 51 having a wide angle of view installed in front of the vehicle 1 in the recognition processing where possible, the second synthesis unit 95 changes the synthesis position such that the area of the image is widened, namely, in such a manner as to reduce occlusion. In this case, in the first synthesis unit 94, by setting the synthesis position such that the driver or the like feels less uncomfortable when viewing the image, it is possible to achieve both improvement in accuracy in the recognition processing such as promptly finding a parking space frame and reduction in unnaturalness in an overhead image to be displayed. The second synthesis unit 95 outputs the generated second overhead image to the recognition processing unit 96.

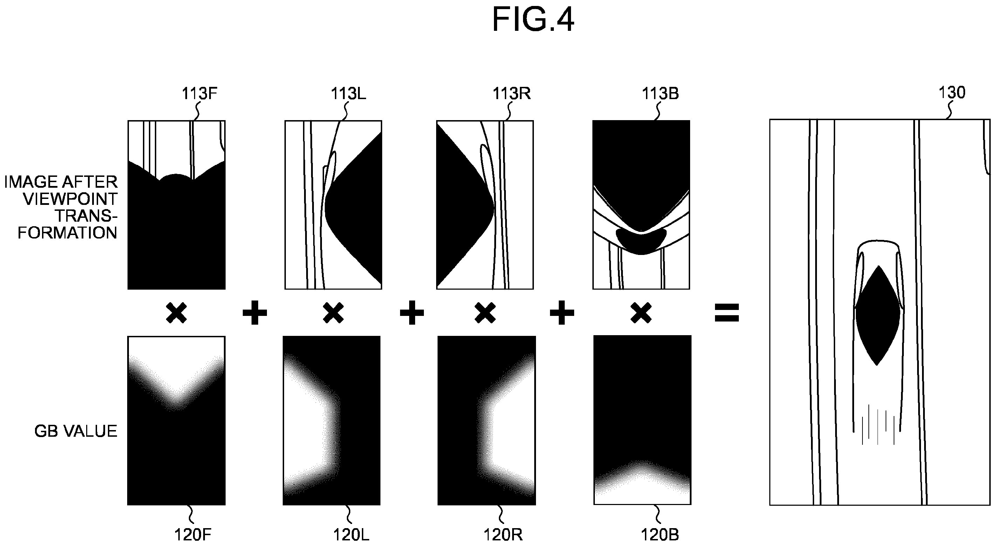

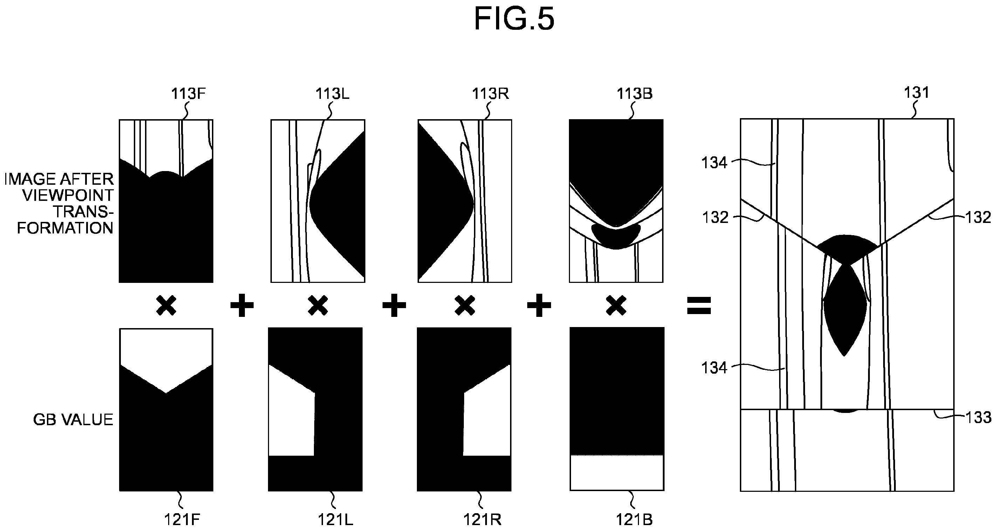

Here, the first synthesis processing and the second synthesis processing will be described with reference to FIGS. 4 and 5. FIG. 4 is a diagram illustrating an example of synthesis of the first overhead image. Images 113F, 113L, 113R, and 113B after the viewpoint transformation illustrated in FIG. 4 are images of the front, left, right, and rear sides of the vehicle 1, respectively. The first synthesis unit 94 that executes the first synthesis processing multiplies the image 113F after the viewpoint transformation by a GB value 120F. The GB value 120F has predetermined gradation at a boundary. Similarly, the first synthesis unit 94 multiplies the images 113L, 113R, and 113B after the viewpoint transformation by GB values 120L, 120R, and 120B each having predetermined gradation at a boundary, respectively. The first synthesis unit 94 generates an overhead image 130 by combining the images after being multiplied by the GB values. Since the overhead image 130 is synthesized such that the boundaries among the images 113F, 113L, 113R, and 113B are inconspicuous, it is possible to reduce unnaturalness of the boundaries when viewed by the driver or the like.

FIG. 5 is a diagram illustrating an example of synthesis of the second overhead image. Images 113F, 113L, 113R, and 113B after the viewpoint transformation illustrated in FIG. 5 are images of the front, left, right, and rear sides of the vehicle 1, respectively, as in FIG. 4. The second synthesis unit 95 that executes the second synthesis processing multiplies the image 113F after the viewpoint transformation by a GB value 121F. The GB value 121F has no predetermined gradation at a boundary. Similarly, the second synthesis unit 95 multiplies the images 113L, 113R, and 113B after the viewpoint transformation by GB values 121L, 121R, and 121B each having no predetermined gradation at a boundary, respectively. The second synthesis unit 95 generates an overhead image 131 by combining the images after being multiplied by the GB values. In the overhead image 131, boundaries 132 between the image 113F and the images 113L and 113R and a boundary 133 between the image 113B and the images 113L and 113R are conspicuous. Furthermore, a curb 134 of the overhead image 131 is misaligned at the boundaries 132 and 133. However, in the recognition processing for the surroundings of the vehicle 1, lines of parking space frames, car stoppers, obstacles, and the like are recognized depending on a detection results of each of the cameras 51, and thus, these misalignments do not pose a problem. Moreover, in terms of accuracy of recognition, it is better than the overhead image 130 obtained by performing gradient blending illustrated in FIG. 4. That is, as an overhead image, the overhead image 130 is more preferable when viewed by the driver or the like, and the overhead image 131 is more preferable when the recognition processing is performed.

Note that, in the overhead image generating unit 93, the first synthesis processing by the first synthesis unit 94 and the second synthesis processing by the second synthesis unit 95 may be executed in parallel, or only one type of processing may be executed. In addition, in the overhead image generating unit 93, whether or not to execute the first synthesis processing and the second synthesis processing in parallel can be desirably designated by an instruction from the travel assistance and autonomous driving control unit 29, setting in the recognition unit 73, or the like.

Let us return to the description of FIG. 3. The second overhead image is input from the second synthesis unit 95 to the recognition processing unit 96. The recognition processing unit 96 executes recognition processing of lines of parking space frames, car stoppers, obstacles, and the like around the vehicle 1 as well as traffic rules using the second overhead image input thereto. The recognition processing unit 96 outputs the recognition result to the operation control unit 63. Furthermore, the recognition processing unit 96 may output the recognition result to the display processing unit 97. In this case, the recognition processing unit 96 outputs, to the display processing unit 97, for example, position information of lines of parking space frames, car stoppers, obstacles, and the like as a recognition result.

The first overhead image is input from the first synthesis unit 94 to the display processing unit 97. The recognition result may also be input from the recognition processing unit 96 to the display processing unit 97. The display processing unit 97 adjusts the first overhead image input thereto to be suitable for display on the HMI 31 and outputs the adjusted first overhead image to the HMI 31. When the recognition result is input from the recognition processing unit 96, the display processing unit 97 combines or superimposes the recognition result with or on the first overhead image, for example, and outputs the first overhead image after adjustment including the recognition result to the HMI 31.

### <<3. Procedure of Information Processing According to Embodiments>>

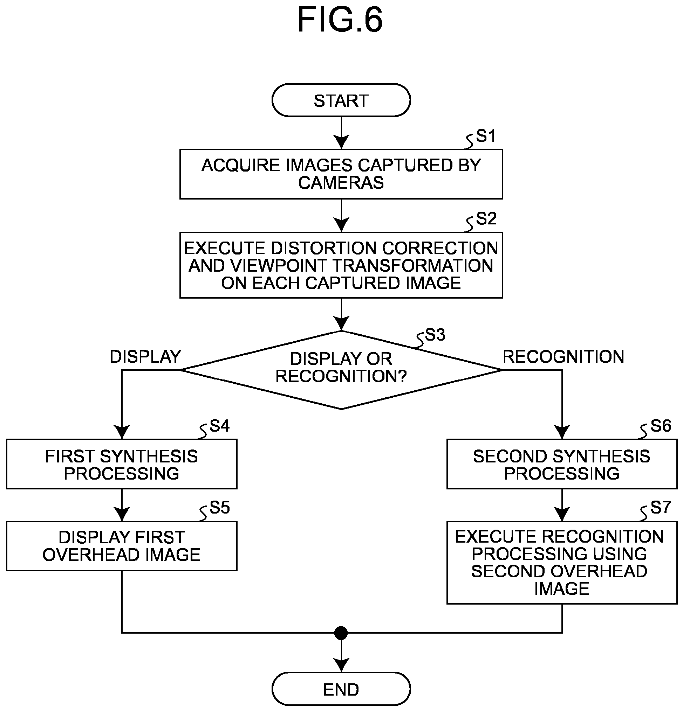

Next, overhead image generation processing will be described with reference to FIG. 6. FIG. 6 is a flowchart illustrating an example of the overhead image generation processing. Note that the overhead image generation processing may be repeatedly executed.

As illustrated in FIG. 6, the viewpoint transformation unit 92 of the image processing unit 90 acquires images captured by the cameras 51 (step S1). The viewpoint transformation unit 92 executes distortion correction and viewpoint transformation on each of the captured images having been acquired using a corresponding transformation map (step S2). The viewpoint transformation unit 92 outputs, to the overhead image generating unit 93, the images corresponding to the respective cameras 51 that have been subjected to the viewpoint transformation.

When the images having been subjected to the viewpoint transformation are input from the viewpoint transformation unit 92, the overhead image generating unit 93 determines whether the application of the overhead image is for display or for recognition (step S3). If it is determined that the application of the overhead image is for display (step S3: display), the overhead image generating unit 93 inputs the mages having been subjected to the viewpoint transformation to the first synthesis unit 94.

The first synthesis unit 94 executes the first synthesis processing of combining the input images having been subjected to the viewpoint transformation by gradient blending and generating the first overhead image (step S4). The first synthesis unit 94 outputs the generated first overhead image to the display processing unit 97. The display processing unit 97 adjusts the first overhead image input thereto to be suitable for display on the HMI 31, outputs the adjusted first overhead image to the HMI 31 to display the first overhead image (step S5), and ends the overhead image generation processing.

On the other hand, if it is determined that the application of the overhead image is for recognition (step S3: recognition), the overhead image generating unit 93 inputs the mages having been subjected to the viewpoint transformation to the second synthesis unit 95.

The second synthesis unit 95 executes the second synthesis processing of combining the input images having been subjected to the viewpoint transformation by simple blending and generating the second overhead image (step S6). The second synthesis unit 95 outputs the generated second overhead image to the recognition processing unit 96. The recognition processing unit 96 executes the recognition processing using the second overhead image input thereto (step S7). The recognition processing unit 96 outputs the recognition result to the operation control unit 63 and ends the overhead image generation processing. Incidentally, in a case of executing display and recognition in parallel in step S3, the overhead image generating unit 93 executes control to execute steps S4 and S5 of the first synthesis unit 94 and steps S6 and S7 of the second synthesis unit 95 in parallel. As a result, the load of the image geometric transformation processing executed by the viewpoint transformation unit 92 can be reduced.

### <<4. Modifications of Embodiments>>

The processing according to the above embodiments may be performed in various different embodiments other than the above embodiments.

In the above embodiment, gradient blending is employed in the first synthesis processing; however, the present invention is not limited thereto. For example, various types of blending processing such as alpha blending, comparison, and multiplication may be used.

In addition, a processing procedure, a specific name, and information including various types of data or parameters illustrated in the above or in the drawings can be modified as desired unless otherwise specified. For example, various types of information illustrated in the drawings are not limited to the information illustrated.

In addition, each component of each device illustrated in the drawings is conceptual in terms of function and is not necessarily physically configured as illustrated in the drawings. That is, the specific form of distribution and integration of devices is not limited to those illustrated in the drawings, and all or a part thereof can be functionally or physically distributed or integrated in any unit depending on various loads, use status, or the like. For example, some of the functions of the overhead image generating unit 93 may be distributed to the first synthesis unit 94 and the second synthesis unit 95.

In addition, the above embodiments and modifications can be combined as appropriate as long as the processing contents thereof do not contradict with each other.

### <<5. Hardware Configuration>>

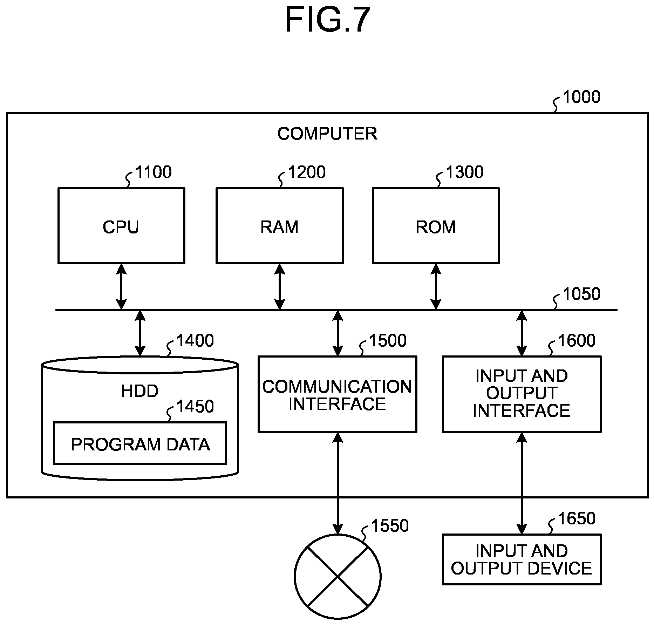

An information device such as the recognition unit 73 according to the embodiments described above is implemented by, for example, a computer 1000 having a configuration as illustrated in FIG. 7. Hereinafter, the recognition unit 73, which is the information processing device according to an embodiment, will be described as an example. FIG. 7 is a hardware configuration diagram illustrating an example of a computer that implements the functions of the information processing device. The computer 1000 includes a CPU 1100, a RAM 1200, a read only memory (ROM) 1300, a hard disk drive (HDD) 1400, a communication interface 1500, and an input and output interface 1600. The components of the computer 1000 are connected by a bus 1050.

The CPU 1100 operates in accordance with a program stored in the ROM 1300 or the HDD 1400 and controls each of the components. For example, the CPU 1100 loads a program stored in the ROM 1300 or the HDD 1400 in the RAM 1200 and executes processing corresponding to various programs.

The ROM 1300 stores a boot program such as a basic input output system (BIOS) executed by the CPU 1100 when the computer 1000 is activated, a program dependent on the hardware of the computer 1000, and the like.

The HDD 1400 is a computer-readable recording medium that non-transiently records a program to be executed by the CPU 1100, data used by such a program, and the like. Specifically, the HDD 1400 is a recording medium that records an information processing program according to the present disclosure, which is an example of program data 1450.

The communication interface 1500 is an interface for the computer 1000 to be connected with an external network 1550 (for example, the Internet). For example, the CPU 1100 receives data from another device or transmits data generated by the CPU 1100 to another device via the communication interface 1500.

The input and output interface 1600 is an interface for connecting an input and output device 1650 and the computer 1000. For example, the CPU 1100 receives data from an input device such as a keyboard or a mouse via the input and output interface 1600. In addition, the CPU 1100 transmits data to an output device such as a display, a speaker, or a printer via the input and output interface 1600. Furthermore, the input and output interface 1600 may function as a media interface that reads a program or the like recorded in a predetermined recording medium. A medium refers to, for example, an optical recording medium such as a digital versatile disc (DVD) or a phase change rewritable disk (PD), a magneto-optical recording medium such as a magneto-optical disk (MO), a tape medium, a magnetic recording medium, or a semiconductor memory.

For example, in a case where the computer 1000 functions as the recognition unit 73 according to the embodiment, the CPU 1100 of the computer 1000 implements the functions of the image processing unit 90 or other units by executing the information processing program loaded on the RAM 1200. The HDD 1400 also stores the information processing program according to the present disclosure or data in the storage unit 28 or others. Note that although the CPU 1100 reads the program data 1450 from the HDD 1400 and executes the program, as another example, these programs may be acquired from another device via the external network 1550.

### <<6. Effects>>

The information processing device (recognition unit 73) includes the viewpoint transformation unit 92 and the overhead image generating unit 93. The viewpoint transformation unit 92 performs viewpoint transformation on a plurality of images generated by a plurality of imaging units mounted on the front, rear, left, and right sides of the vehicle 1. The overhead image generating unit 93 generates an overhead image by combining the plurality of images subjected to the viewpoint transformation by the viewpoint transformation unit 92. In addition, the overhead image generating unit 93 executes the first synthesis processing in a case of generating the first overhead image to be displayed in the vehicle 1 and executes the second synthesis processing different from the first synthesis processing in a case of generating the second overhead image for executing the recognition processing for the surroundings of the vehicle 1. As a result, the load of the image geometric transformation processing executed by the viewpoint transformation unit 92 can be reduced.

In the first synthesis processing, the plurality of images subjected to the viewpoint transformation is combined by gradient blending to generate the first overhead image. As a result, it is possible to reduce unnaturalness of boundaries in the image to be displayed.

The gradient blending uses a gradient blending values having a predetermined gradation at a boundary. As a result, it is possible to reduce unnaturalness of boundaries in the image to be displayed.

In the second synthesis processing, the plurality of images subjected to the viewpoint transformation is combined by simple blending to generate the second overhead image. This makes it possible to more accurately recognize an object around the vehicle 1.

The simple blending uses gradient blending values having no gradation at a boundary. This makes it possible to more accurately recognize an object around the vehicle 1.

In the first synthesis processing, color correction is performed on each of the plurality of images subjected to the viewpoint transformation. As a result, it is possible to make the image to be displayed look more natural.

When combining the plurality of images having been subjected to the viewpoint transformation, the second synthesis processing combines the viewpoint-transformed images at a synthesis position different from a synthesis position in the first synthesis processing. This makes it possible to achieve both improvement in accuracy in the recognition processing and reduction in unnaturalness in the overhead image that is displayed.

The overhead image generating unit 93 executes the first synthesis processing and the second synthesis processing in parallel. This makes it possible to simultaneously perform display of the overhead image and the recognition processing.

The recognition processing is processing of recognizing lines of parking space frames, car stoppers, or obstacles. This makes it possible to assist parking of the vehicle 1.

Note that the effects described herein are merely examples and are not limited, and other effects may also be achieved.

Note that the present technology can also have the following configurations.
(1) An information processing device comprising:
   a viewpoint transformation unit that performs viewpoint transformation on a plurality of images generated by a plurality of imaging units mounted on front, rear, left, and right sides of a vehicle; and
   an overhead image generating unit that generates an overhead image by combining the plurality of images having been subjected to the viewpoint transformation by the viewpoint transformation unit, wherein
   the overhead image generating unit
   in a case where a first overhead image to be displayed in the vehicle is generated, executes first synthesis processing, and
   in a case where a second overhead image for executing recognition processing for surroundings of the vehicle is generated, executes second synthesis processing different from the first synthesis processing.
(2) The information processing device according to (1), wherein
   the first synthesis processing combines the plurality of images having been subjected to the viewpoint transformation by gradient blending and generates the first overhead image.
(3) The information processing device according to (2), wherein
   the gradient blending uses a gradient blending value having a predetermined gradation at a boundary.
(4) The information processing device according to any one of (1) to (3), wherein
   the second synthesis processing combines the plurality of images having been subjected to the viewpoint transformation by simple blending and generates the second overhead image.
(5) The information processing device according to (4), wherein
   the simple blending uses a gradient blending value having no gradation at a boundary.
(6) The information processing device according to any one of (1) to (5), wherein
   the first synthesis processing performs color correction on each of the plurality of images having been subjected to the viewpoint transformation.
(7) The information processing device according to any one of (1) to (6), wherein
   when combining the plurality of images having been subjected to the viewpoint transformation, the second synthesis processing combines the plurality of images having been subjected to the viewpoint transformation at a synthesis position different from a synthesis position in the first synthesis processing.
(8) The information processing device according to any one of (1) to (7), wherein
   the overhead image generating unit executes the first synthesis processing and the second synthesis processing in parallel.
(9) The information processing device according to any one of (1) to (8), wherein
   the recognition processing is processing of recognizing a line of a parking space frame, a car stopper, or an obstacle.
(10) An information processing method in which a computer executes processing of:
   performing viewpoint transformation on a plurality of images generated by a plurality of imaging units mounted on front, rear, left, and right sides of a vehicle; and
   generating an overhead image by combining the plurality of images having been subjected to the viewpoint transformation, wherein
   the processing of generating
   in a case where a first overhead image to be displayed in the vehicle is generated, executes first synthesis processing, and
   in a case where a second overhead image for executing recognition processing for surroundings of the vehicle is generated, executes second synthesis processing different from the first synthesis processing.

### Reference Signs List

- 1: VEHICLE

- 11: VEHICLE CONTROL SYSTEM
- 25: EXTERNAL RECOGNITION SENSOR
- 28: STORAGE UNIT
- 29: TRAVEL ASSISTANCE AND AUTONOMOUS DRIVING CONTROL UNIT
- 31: HUMAN-MACHINE INTERFACE (HMI)
- 32: VEHICLE CONTROL UNIT
- 51: CAMERA
- 61: ANALYSIS UNIT
- 62: ACTION PLANNING UNIT
- 63: OPERATION CONTROL UNIT
- 71: SELF-POSITION ESTIMATION UNIT
- 72: SENSOR FUSION UNIT
- 73: RECOGNITION UNIT
- 91: TRANSFORMATION MAP GENERATING UNIT
- 92: VIEWPOINT TRANSFORMATION UNIT
- 93: OVERHEAD IMAGE GENERATING UNIT
- 94: FIRST SYNTHESIS UNIT
- 95: SECOND SYNTHESIS UNIT
- 96: RECOGNITION PROCESSING UNIT

- 97: DISPLAY PROCESSING UNIT

## Claims

1. An information processing device comprising:
a viewpoint transformation unit that performs viewpoint transformation on a plurality of images generated by a plurality of imaging units mounted on front, rear, left, and right sides of a vehicle; and
an overhead image generating unit that generates an overhead image by combining the plurality of images having been subjected to the viewpoint transformation by the viewpoint transformation unit, wherein
the overhead image generating unit
in a case where a first overhead image to be displayed in the vehicle is generated, executes first synthesis processing, and
in a case where a second overhead image for executing recognition processing for surroundings of the vehicle is generated, executes second synthesis processing different from the first synthesis processing.

2. The information processing device according to claim 1, wherein
the first synthesis processing combines the plurality of images having been subjected to the viewpoint transformation by gradient blending and generates the first overhead image.

3. The information processing device according to claim 2, wherein
the gradient blending uses a gradient blending value having a predetermined gradation at a boundary.

4. The information processing device according to claim 1, wherein
the second synthesis processing combines the plurality of images having been subjected to the viewpoint transformation by simple blending and generates the second overhead image.

5. The information processing device according to claim 4, wherein
the simple blending uses a gradient blending value having no gradation at a boundary.

6. The information processing device according to claim 1, wherein
the first synthesis processing performs color correction on each of the plurality of images having been subjected to the viewpoint transformation.

7. The information processing device according to claim 1, wherein
when combining the plurality of images having been subjected to the viewpoint transformation, the second synthesis processing combines the plurality of images having been subjected to the viewpoint transformation at a synthesis position different from a synthesis position in the first synthesis processing.

8. The information processing device according to claim 1, wherein
the overhead image generating unit executes the first synthesis processing and the second synthesis processing in parallel.

9. The information processing device according to claim 1, wherein
the recognition processing is processing of recognizing a line of a parking space frame, a car stopper, or an obstacle.

10. An information processing method in which a computer executes processing of:
performing viewpoint transformation on a plurality of images generated by a plurality of imaging units mounted on front, rear, left, and right sides of a vehicle; and
generating an overhead image by combining the plurality of images having been subjected to the viewpoint transformation, wherein
the processing of generating
in a case where a first overhead image to be displayed in the vehicle is generated, executes first synthesis processing, and
in a case where a second overhead image for executing recognition processing for surroundings of the vehicle is generated, executes second synthesis processing different from the first synthesis processing.
